# EUROPÄISCHE PATENTSCHRIFT

(11) **EP 0 941 663 B1**
(45) Veröffentlichungstag und Bekanntmachung des Hinweises auf die Patenterteilung: **26.05.2004**
(21) Anmeldenummer: 99104157.5
(22) Anmeldetag: 02.03.1999
(51) Int. Cl.: A22C 13/00

(54) **Markierbare Nahrungsmittelhülle**
Markable food casings
Enveloppes marquables pour aliments

(30) Priorität: 13.03.1998 DE 19810952
(43) Veröffentlichungstag der Anmeldung: 15.09.1999
(73) Patentinhaber: Kalle Nalo GmbH & Co. KG, 65203 Wiesbaden (DE)
(72) Erfinder: Kastl, Erna, 65519 Hünstetten (DE)
(74) Vertreter: Zounek, Nikolai, Dipl.-Ing.

(56) Entgegenhaltungen:
- EP-A- 0 111 357
- EP-A- 0 190 997
- EP-A- 0 738 471
- WO-A-95/04102
- FR-A- 2 175 947
- GB-A- 2 314 806
- US-A- 2 207 793
- US-A- 2 255 810
- US-A- 5 422 383

## Beschreibung

Gegenstand der Erfindung ist eine ein- oder mehrschichtige Nahrungsmittelhülle auf der Basis von natürlichen und/oder synthetischen Polymeren.

Künstliche Wursthüllen mit einer Pigmentierung sind bereits seit langem bekannt (s. G. Effenberger, "Wursthüllen - Kunstdarm", Holzmann Buchverlag, Bad Wörishofen, 2. Aufl. [1991], S. 35/36). Durch die Pigmentierung wird die Durchlässigkeit für den Lichtbereich, der für die Oxidation der Fettbestandteile der Wurst verantwortlich ist (das ist insbesondere UV-Strahlung) herabgesetzt. Bei Wurstsorten, deren Herstellungsmerkmal ein hoher Gehalt an Stickoxidmyoglobin ist (das sind insbesondere Brüh- und Kochwürste), sind daher eingefärbte Kunstdärme allgemein üblich. Eingefärbt werden dürfen allerdings nur solche Hüllen, die zum Mitverzehr weder bestimmt noch geeignet sind. Eine auch unter den Bedingungen der Wurstherstellungen dauerhafte Markierung läßt sich auf solchen pigmentierten Hüllen jedoch nicht ohne weiteres anbringen.

Das verstärkte Auftreten von Tierseuchen, wie Schweinepest, BSE ("Rinderwahn") und Salmonellose (insbesondere bei Geflügel), hat zu einer Verunsicherung der Fleischverbraucher und damit zu einem Absatzverlust auch bei Wurstwaren geführt, so daß solchen Markierungen mittlerweile eine besondere Bedeutung zukommt. Eine individuelle Markierung, anhand derer sich die Herkunft und/oder der Verarbeitungsweg der verpackten Waren feststellen läßt, muß fettund wasserfest sein. Das ist bei der Beschriftung mit Tintenstrahldruckern ("inkjets") nicht möglich.

In der EP-A 111 357 sind lasermarkierbare Tiefzieh-Artikel offenbart, darunter auch Behälter zur Verpackung von Nahrungsmitteln sowie passende Deckel dafür. Die Artikel weisen eine Polyolefinoberfläche auf, wobei das Polyolefin mit einer laserabsorbierenden Substanz abgemischt ist. Unter der Einwirkung von Laserstrahlen bewirkt die Substanz eine Carbonisierung des Polyolefins. Das carbonisierte Polyolefin ist schwarz und hebt sich so von der Umgebung ab.

In der EP-A 0 190 997 wird ein Verfahren zum Laserbeschriften pigmentierter Kunststoffolien beschrieben. Die Folien sind jedoch nicht als Nahrungsmittelhüllen vorgesehen.

Es stellte sich daher die Aufgabe, eine farbige oder farblose Nahrungsmittelhülle zur Verfügung zu stellen, die sich einfach und schnell mit einer dauerhaften Markierung versehen läßt. Durch die Markierung soll die Oberfläche der Hülle nicht beschädigt und möglichst auch nicht verändert werden. Das ist insbesondere für solche Nahrungsmittelhüllen wichtig, die nach dem Füllen mit Heißdampf oder Heißwasser in Berührung kommen und daher eine gleichmäßige mechanische Stabilität besitzen müssen. Die Markierung soll schließlich so schnell durchgeführt werden können, daß sie in eine halb- oder vollautomatische Wurstfüll-, Portionier- und Clip- und Verpackungsmaschine integriert werden kann.

Gelöst wird die Aufgabe mit Hilfe von sogenannten Laserpigmenten. Gegenstand der vorliegenden Erfindung ist demnach eine ein- oder mehrschichtige, schlauchförmige Wursthülle auf der Basis von natürlichen und/oder synthetischen Polymeren, die dadurch gekennzeichnet ist, daß die Schicht bzw. mindestens eine der Schichten durch Laserstrahlen markierbar ist und ein lasersensitives Perlglanz- oder Metallglanzpigment enthält. Das sind plättchenförmige, synthetische oder natürliche Pigmente mit einem überdurchschnittlich großen Teilchendurchmesser (allgemein etwa 5 bis 50 µm), die in Kunststoffmaterial praktisch unlöslich sind. Sie lassen nur einen Teil des Lichts durch; der Rest wird reflektiert und/oder absorbiert. Die Pigmentpartikel lassen sich im wesentlichen parallel zueinander anordnen und bewirken durch Mehrfachreflexion den typischen Perl- bzw. Metallglanz. In einer bevorzugten Ausführungsform bestehen die Perlglanz- bzw. Metallglanzpigmente aus beschichteten Glimmerschuppen. Die Glimmerschuppen ihrerseits bestehen vorzugsweise aus natürlichem, transparenten Muskovit oder aus synthetischem Phlogopit. Sie tragen eine dünne Schicht aus einem Metalloxid oder einer Metallverbindung mit einer hohen Brechzahl (nₐ größer als 2,5). Diese Schicht kann wie folgt sein:
- nicht absorbierend (beispielsweise wenn sie aus Titandioxid vom Rutiloder Anatas-Typ, aus ZrO₂ oder SnO₂ besteht),
- selektiv absorbierend (beispielsweise im Fall der Beschichtung mit Fe₂O₃, Cr₂O₃, FeK[Fe^{II}Fe^{III}(CN)₆] oder CrPO₄) oder
- total absorbierend (beispielsweise im Fall von Fe₃O₄, TiO, TiN, FeTiO₃, C, Ag, Au, Fe,, Mo, Cr oder W).

Perlglanz- wie auch Metallglanzpigmente sind kommerziell erhältlich, z.B. unter der Bezeichnung ® Iriodin LS (LS = laser sensitive) von der Merck AG. Eingesetzt wurden diese Pigmente bisher zur Herstellung von lasermarkierbaren Artikeln aus Kunststoffen wie Polyvinylchlorid, Polyethylen, Polypropylen oder Polystyrol.

In der erfindungsgemäßen Nahrungsmittelhülle sind die Pigmentpartikel im wesentlichen parallel zueinander angeordnet und gleichmäßig verteilt in die Polymermatrix eingebettet. Der Laserstrahl trifft dann nahezu senkrecht auf die Pigmentplättchen und wird weitgehend reflektiert. Einfallender und ausfallender Lichtstrahl liegen also sehr nahe beieinander. Dadurch wird gleichzeitig die für eine lokale Änderung der Polymermatrix erforderliche Energiedichte erreicht. Die lokale Änderung ist beispielsweise erkennbar an einer Carbonisierung der Polymermatrix. Es wird auch für möglich gehalten, daß die Carbonisierung die Folge einer kurzzeitig starken Erhitzung der Pigmentpartikel ist. Die Carbonisierung tritt jeweils nur im unmittelbaren Umfeld der Pigmentpartikel auf, so daß die mechanische Stabilität der Nahrungsmittelhülle weitgehend gewahrt bleibt. Bei einer transparenten (nicht eingefärbten) oder hell eingefärbten Polymermatrix führt die Carbonisierung zu dunklen Stellen, während bei einer dunkel eingefärbten Polymermatrix eine Aufhellung an diesen Stellen beobachtet wird. Die für eine etwaige Einfärbung der Hülle verwendeten nicht lasersensitiven, weiteren Pigmente (z.B. TiO₂) sind unschädlich und reduzieren den Kontrast der Lasermarkierung praktisch nicht. Allenfalls die Eindringtiefe der Laserstrahlen kann durch die zusätzlichen Pigmente vermindert sein. Der Anteil der weiteren Pigmente kann dabei so groß sein, daß der Perl- oder Metallglanz nicht mehr erkennbar ist.

Der Anteil der Laserpigmente beträgt 0,05 bis 4 Gew.-%, bevorzugt 0,1 bis 2 Gew.-%, bezogen auf das Gesamtgewicht der Polymere in der Schicht. Ein Anteil an Perlglanz- bzw. Metallglanzpigment nahe den oberen Grenzen der angegebenen Bereiche führt ebenfalls zu einer verminderten Eindringtiefe des Laserstrahls, so daß sich die Carbonisierung auch in diesem Fall zur Oberfläche verlagert. Bei etwa 1 Gew.-% Pigmentzusatz weist die Schwärzung (im Fall eines hellen oder transparenten Polymermaterials) ihr Maximum auf. Der Zusatz der Laserpigmente in den angegebenen Mengen führt praktisch zu keiner Verminderung der Transparenz des Polymermaterials. Es lassen sich somit auch kontrastreiche Markierungen in ansonsten transparenten Nahrungsmittelhüllen schaffen.

Die Lasermarkierungen werden vorzugsweise mit Hilfe von CO₂-Lasern, Nd-YAG-Lasern oder Excimerlasern angebracht. Es sind damit sowohl UV/VIS- als auch IR-Laser einsetzbar. Laserstrahlung im UV-Bereich bewirkt in der Regel keine Carbonisierung der Polymermatrix, sondern eine dauerhafte Verfärbung des Pigments selbst.

Die erfindungsgemäße Nahrungsmittelhülle ist bevorzugt eine Polymerhülle, d.h. eine Hülle auf der Basis von Polyamid, Polyester, Polyolefin, Polyvinylidenchlorid, Polyvinylacetat und/oder anderen, in Polymerhüllen allgemein üblichen Polymeren. Die Polymerhülle kann ein- oder mehrschichtig sein. Im Fall einer mehrschichtigen Hülle können sich die Laserpigmente in jeder beliebigen Schicht befinden, sie müssen sich nicht notwendigerweise in der äußeren Schicht befinden. Es ist auch möglich, daß sich in verschiedenen Schichten die gleichen oder verschiedene Laserpigmente befinden. Die mehrschichtigen Hüllen werden im allgemeinen durch Coextrusion hergestellt. Unter dem Begriff "Schicht" soll im Zusammenhang mit der vorliegenden Erfindung auch eine diskontinuierliche Schicht verstanden werden, wie man sie beispielsweise durch Aufdrucken erhält.

Die erfindungsgemäße Hülle kann auch eine gegebenenfalls mit einer Faserverstärkung versehene Cellulosehülle sein. Die Cellulosehülle wird normalerweise nach dem Viskoseverfahren hergestellt. Die Perlglanz- bzw. Metallglanzpigmente, gegebenenfalls auch weitere Pigmente, werden dabei gleichmäßig in der (stark alkalischen) Viskose verteilt. Durch Behandeln mit einem sauren Fällbad wird das Cellulosexanthogenat dann zu Cellulose regeneriert. Alternativ dazu lassen sich Cellulosehüllen auch nach dem N-Methyl-morpholin-N-oxid (NMMO)-Verfahren herstellen. Anders als im Viskoseverfahren wird die Cellulose dabei nicht derivatisiert, sondern als solche in einem NMMO/Wasser-Gemisch gelöst. Die Perlglanzpigmente können dann in dieser Lösung dispergiert werden. Das NMMO-Verfahren hat den weiteren Vorteil, daß stark alkalische Bedingungen vermieden werden, so daß sich auch empfindliche Pigmente einsetzen lassen.

Die Laserbeschriftung von pigmentierten Kunststoffsystemen, u.a. auch von pigmentierten Verpackungsfolien, ist bereits aus der EP-A 190 997 bekannt. Dort sind eine Reihe von anorganischen und organischen Pigmenten offenbart. Perlglanz- oder Metallglanzpigmente befinden sich jedoch nicht darunter. Mit diesen speziellen Pigmenten lassen sich durch Einwirkung von Laserstrahlen Beschriftungen oder - allgemein - Muster erzeugen, die einen überraschend besseren Kontrast aufweisen. Pigmentierte Nahrungsmittelhüllen sind in der EP-A ebenfalls nicht beschrieben.

Gegenstand der vorliegenden Erfindung ist ferner Verfahren zur Markierung von Nahrungsmittelhüllen, bevorzugt schlauchförmigen Wursthüllen, das dadurch gekennzeichnet ist, daß man Laserstrahlen auf die Hülle einwirken läßt. Die Hülle ist vorzugsweise eine Hülle der oben beschriebenen Art. Die schlauchförmigen Hüllen können dabei nahtlos sein oder auch eine Naht aufweisen. Nahtlose Hüllen erhält man durch Extrusion der Schmelze durch eine Ringdüse, während Hüllen mit Naht in der Regel hergestellt werden, indem man eine Flachfolie zu einem Schlauch formt und die Enden durch Heißsiegeln oder auf andere Art miteinander verbindet.

Die erfindungsgemäße Hülle läßt sich ohne weiteres auch in gefülltem Zustand lasermarkieren, wobei die Markierung kontrastreich und vorzugsweise irreversibel ist.

## Patentansprüche

1. Ein- oder mehrschichtige, schlauchförmige Wursthülle auf der Basis von natürlichen und/oder synthetischen Polymeren, **dadurch gekennzeichnet, daß** die Schicht bzw. mindestens eine der Schichten ein lasersensitives Perlglanz- oder Metallglanzpigment enthält und durch Laserstrahlen markierbar ist.

2. Wursthülle gemäß Anspruch 1, **dadurch gekennzeichnet, daß** der Anteil des lasersensitiven Pigments 0,05 bis 4 Gew.-%, bevorzugt 0,1 bis 2 Gew.-%, beträgt, jeweils bezogen auf das Gesamtgewicht der Polymere in der Schicht.

3. Wursthülle gemäß Anspruch 1, **dadurch gekennzeichnet, daß** sie in der Schicht bzw. in mindestens einer der Schichten mindestens ein nicht lasersensitives Pigment enthält.

4. Wursthülle gemäß Anspruch 1, **dadurch gekennzeichnet, daß** es sich um eine Hülle auf der Basis von Polyamid, Polyester, Polyolefin, Polyvinylidenchlorid, Polyvinylacetat und/oder anderen, in Polymerhüllen allgemein üblichen Polymeren oder Mischpolymeren oder Blends davon handelt.

5. Wursthülle gemäß einem oder mehreren der Ansprüche 1 bis 3, **dadurch gekennzeichnet, daß** es sich um eine Hülle auf der Basis von Cellulose, Stärke oder anderen natürlichen Polymeren oder Derivaten davon handelt.

6. Verfahren zur Markierung einer schlauchförmigen Wursthülle gemäß einem oder mehreren der Ansprüche 1 bis 5, **dadurch gekennzeichnet, daß** man Laserstrahlen auf die Hülle einwirken läßt.

## Claims

1. A single-layered or multilayered, tubular sausage casing based on natural and/or synthetic polymers, wherein the layer, or at least one of the layers, comprises a laser-sensitive pearl luster pigment or metal luster pigment and can be marked by laser beams.

2. The sausage casing as claimed in claim 1, wherein the fraction of the laser-sensitive pigment is 0.05 to 4 % by weight, preferably 0.1 to 2 % by weight, in each case based on the total weight of the polymers in the layer.

3. The sausage casing as claimed in claim 1, wherein, in the layer, or in at least one of the layers, the casing comprises at least one non-laser-sensitive pigment.

4. The sausage casing as claimed in claim 1, wherein it is a casing based on polyamide, polyester, polyolefin, polyvinylidene chloride, polyvinyl acetate and/or other polymers or mixed polymers or blends thereof generally customary in polymer casings.

5. The sausage casing as claimed in one or more of claims 1 to 3, wherein it is a casing based on cellulose, starch, or other natural polymers or derivatives thereof.

6. A process for marking a tubular sausage casing as claimed in one or more of claims 1 to 5, which comprises allowing laser beams to act on the casing.

## Revendications

1. Enveloppe à saucisse en forme de tuyau à une ou plusieurs couches à base de polymères synthétiques et/ou naturels, **caractérisée en ce que** la couche et/ou au moins une des couches contient un pigment nacré ou métallique sensible au laser et peut être marquée par un faisceau laser.

2. Enveloppe à saucisse selon la revendication 1, **caractérisée en ce que** la part de pigment sensible au laser s'élève entre 0,05 et 4 % en poids, de préférence 0,1 à 2 % en poids, respectivement rapporté au poids global des polymères dans la couche.

3. Enveloppe à saucisse selon la revendication 1, **caractérisée en ce qu'**elle contient dans la couche et/ou dans au moins l'une des couches au moins un pigment insensible au laser.

4. Enveloppe à saucisse selon la revendication 1, **caractérisée en ce qu'**il s'agit d'une enveloppe à base de polyamide, de polyester, de polyoléfine, de polychlorure de vinylidène, de polyacétate de vinyle et/ou d'autres polymères habituels en général dans les enveloppes polymères ou des polymères mixtes ou leurs mélanges.

5. Enveloppe à saucisse selon une ou plusieurs des revendications 1 à 3, **caractérisée en ce qu'**il s'agit d'une enveloppe à base de cellulose, d'amidon ou d'autres polymères naturels ou de leurs dérivés.

6. Procédé de marquage d'une enveloppe à saucisse en forme de tuyau selon une ou plusieurs des revendications 1 à 5, **caractérisée en ce qu'**on fait agir des faisceaux laser sur l'enveloppe.
